# EUROPÄISCHE PATENTSCHRIFT

(11) **EP 0 412 471 B1**
(45) Veröffentlichungstag und Bekanntmachung des Hinweises auf die Patenterteilung: **14.04.1993**
(21) Anmeldenummer: 90115026.8
(22) Anmeldetag: 04.08.1990
(51) Int. Cl.: A01N 59/00, A23B 9/20

(54) **Verfahren zur Schädlingsbekämpfung in körnigen Nahrungsmitteln bei deren Aufbewahrung in Behältern**
Process for pest control in granular foodstuffs stored in containers
Procédé pour lutter contre des parasites dans des aliments granulaires emmagasinés dans des récipients

(30) Priorität: 08.08.1989 DE 3926194
(43) Veröffentlichungstag der Anmeldung: 13.02.1991
(73) Patentinhaber: Linde Aktiengesellschaft, 65189 Wiesbaden (DE)
(72) Erfinder: Rebhan, Dieter, Ing. (grad.), D-8192 Geretsried-Gelting (DE); Däbritz, Peter, Dipl.-Ing. (FH), D-1000 Berlin 28 (DE); Bentert, Hilmar, D-1000 Berlin 37 (DE); Himmen, Hans-Rudolf, Dipl.-Ing., D-8021 Icking (DE); Reichmuth, Christoph, Dr. Dipl.-Ing., D-1000 Berlin 33 (DE)
(74) Vertreter: Schaefer, Gerhard, Dr.

(56) Entgegenhaltungen:
- DE-A- 2 945 334
- US-A- 3 264 118
- US-A- 3 685 431
- US-A- 3 802 333

## Beschreibung

Die Erfindung betrifft ein Verfahren zur Schädlingsbekämpfung in körnigen Nahrungsmitteln, bei deren Aufbewahrung in Behältern, beispielsweise Silos, bei dem ein Stickgas in den Behälter eingeführt wird.

Unter Stickgasen sind Gase zu verstehen, die keinen Sauerstoff enthalten, z.B. Stickstoff und Kohlendioxid. Das erfindugsgemäß zu behandelnde Gut sind Nahrungs- oder gegebenenfalls auch Futtermittelmittel, z.B. Getreide, oder auch körnige Genußmittelstoffe und Gewürze, beispielsweise Kaffeebohnen.

Zur Abtötung von Schädlingen ist es beispielsweise bei in Speichersilos gelagertem Getreide bekannt, dieses über längere Zeiträume (bis zu mehreren Wochen) mit Stickgasen zu spülen, das heißt, durch ständige Stickgaseinleitung in den Speicherbehälter den Sauerstoff daraus zu verdrängen und die im Getreide lebenden Schädlinge, insbesondere verschiedene Käferarten und deren Eier, Larven und Puppen, abzutöten. Diese Vorgehensweise mit ständigem Spülen besitzt verständlicherweise einen hohen Gasverbrauch.

Das gängigere Verfahren besteht deshalb vielmehr darin, die Stickgaseinspeisung durch Messung des im Behälter vorhandenen Sauerstoffgehalts zu regulieren. Dies bedeutet in aller Regel, daß immer soviel Stickgas zugeführt wird, daß zumindest ein bestimmter maximaler Sauerstoffgehalt nicht überschritten wird. Die zuzuführenden Mengen hängen dabei stark vom jeweiligen Anwendungsfall, insbesondere der Art und Größe des jeweils vorhandenen Behälters, ab. Ein Nachteil dieser Methode besteht jedoch darin, daß die Meßeinrichtung zur Feststellung der Sauerstoffkonzentration einen erheblichen Kostenfaktor darstellt. Diese Geräte sind technisch aufwendig und nehmen darüber hinaus im rauhen, praktischen Einsatz leicht Schaden.

Die Aufgabenstellung der vorliegenden Erfindung besteht deshalb darin, ein vom technischen Aufwand, der Störungssicherheit und vom Gasverbrauch her günstiges Verfahrens der geschilderten Art zu gestalten.

Diese Aufgabenstellung wird erfindungsgemäß dadurch gelöst, daß die nach einer einleitenden Verdrängungsspülung hergestellte Stickgasatmosphäre durch druckgesteuerte Aufrechterhaltung eines geringen Überdrucks im Behälter erhalten wird.

Dies geschieht in vorteilhafter Weise dadurch, daß bei Unterschreiten eines bestimmten Druckwerts im Behälter eine Stickgaszugabe ausgelöst wird, die solange erfolgt, bis ein bestimmter zweiter Druckwert erreicht ist. Daneben besteht ebenso die Möglichkeit, nach Erreichen eines unteren Druckwertes jeweils eine zeitlich begrenzte Stickgaszufuhr auszuführen.

Der Effekt dieser Maßnahmen besteht darin, daß eine Drucksteuerung einer Atmosphäre, die ja im Grunde auf einer Druckmessung beruht, auf kostenmäßig günstige Weise zu realisieren ist. Eine Druckmessung ist etwa um den Faktor 10 preiswerter als eine entsprechend sensible Sauerstoffgehaltmessung, wobei es eben mit der erfindungsgemäßen Drucksteuerung, d.h. durch die druckgesteuerte Aufrechterhaltung eines geringen Überdrucks, tatsächlich gelingt, eine sauerstoffarme Atmosphäre aufrecht zu erhalten. Dies ist nicht ohne weiteres zu erwarten - konnte aber durch Messungen des Sauerstoffgehalts in einer derart geregelten Atmosphäre belegt werden. Erfindungsgemäß wird also eine Atmosphäre nicht durch die Zielgröße selbst, nämlich den Sauerstoffgehalt, sondern durch eine damit korrelierte Größe, nämlich den Druck, wirkungsvoll geregelt.

In einer besonders vorteilhaften Ausführung der Erfindung wird die Gasdichtheit des Behälters, in dem die Stickgasbehandlung durchgeführt werden soll, vor der Behandlung erhöht. Mit dieser Maßnahme kann in vielen Fällen die für das erfindungsgemäße Verfahren notwendige Gasmenge wesentlich gesenkt werden. Da in der Praxis eine Vielzahl unterschiedlicher Behälter vorkommt, wie beispielsweise Hochsilos, Schiffsfrachträume, Lagerkammern in Gebäuden, bestehend aus Metall, Kunststoff, Beton, Mauerwerk usw. kann diesbezüglich nicht für jeden Einzelfall die geeignete Maßnahme beschrieben werden. Es ist jedoch im Regelfall relativ einfach, die wesentlichsten Gasverlust-Stellen in einem Behälter, wie beispielsweise Einstiege, Luken, sonstige vorhandene Öffnungen zu erkennen und abzudichten. Hingewiesen sei an dieser Stelle jedoch insbesondere darauf, daß es bei Silos aus Beton oder Mauerwerk, deren Wände in ihrer Gesamtheit als porös und somit sehr gasdurchlässig bezeichnet werden können, gelingt, die Gasdichtheit dadurch deutlich zu erhöhen, daß man diese mit einer elastischen Kunststoffschicht, Farbschicht oder ähnlichem innenseitig versieht.

Vor dem eigentlichen Behandlungsbeginn ist es diesbezüglich grundsätzlich von Vorteil, den Behälter durch kurzzeitiges Beaufschlagen mit höherem Druck, auf seine Dichtheit zu prüfen und gegebenenfalls weitere Leckstellen ausfindig zu machen und abzudichten. Jedenfalls läßt sich das erfindungsgemäße Verfahren bei sorgfältiger Durchführung der eben genannten Maßnahmen wesentlich verfeinern und ökonomisch verbessern. Insbesondere kann auch das Druckniveau, mit dem gearbeitet werden soll, bei größerer Behälterdichtheit weiter abgesenkt und sehr niedrig eingestellt werden. Es ergibt sich so ein äußerst minimierter Gasverbrauch.

Mit Vorteil wird bei der Durchführung des erfindungsgemäßen Verfahrens mit einem Druck unter 1000 Pa bis hin zu 10 Pa (0,1 bis 10 mbar) gearbeitet, vorzugsweise sogar zwischen 10 und 100 Pa. In diesen Druckbereichen ergeben sich minimale Gasverbräuche und es lassen sich dennoch wirksame Stickgasatmosphären mit unter 2% Sauerstoffgehalt aufrechterhalten.

Als besonders vorteilhaft hat sich weiterhin die Anwendung von Stickstoff als Stickgas für das vorliegende Verfahren erwiesen. Der Stickstoff wird dabei in vorteilhafter Weise im unteren (oberen) Bereich des Behälters in diesen eingeführt und die Druckmessung im oberen (unteren) Bereich des Behälters angeordnet. Diese entgegengesetzte Anordnung von Gas-Zuspeisung und Ermittlung der Steuergröße bewirkt, daß sich im gesamten Nahrungsmittelbehälter eine günstige Stickatmosphäre ergibt, da auch an der der Zufuhrstelle entgegengesetzten Stelle im Behälter noch geeignete Bedingungen bezüglich der Stickstoffatmosphäre bestehen.

Bei der Anwendung von CO₂ als Stickgas ist zu berücksichtigen, daß sich bei CO₂ aufgrund seines höheren Gewichts als Luft größere Konzentrationsunterschiede im Silo ausbilden können. Dies ist beispielsweise durch CO₂-Zuführung im Kopfbereich und ebenfalls dort angeordnete Sensorik und gegebenfalls zusätzliche Umwälzeinrichtungen beherrschbar.

Anhand der schematischen Zeichnung soll das erfindungsgemäße Verfahren im folgenden beispielhaft nähet erläutert werden.

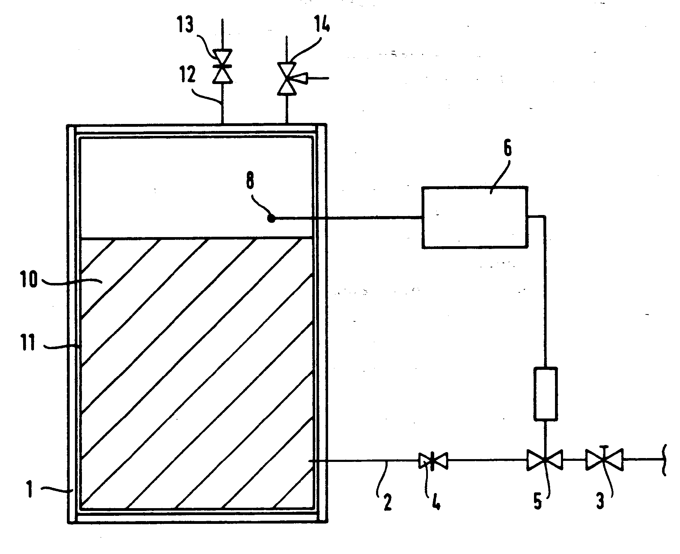

Die Figur zeigt ein Nahrungsmittelsilo 1 mit erfindungsgemäßer Stickgasatmosphärenregelung wobei die gezeigte Anordnung insbesondere für Stickstoff geeignet ist. Die Gaszuleitung zum Silo erfolgt über eine Leitung 1, die im unteren Bereich des Silos 1 in dieses einmündet und die andererseits mit einer nichtdargestellten Gasquelle verbunden ist. Die Leitung 1 ist dabei mit den zur Gasregelung notwendigen Armaturen, wie ein Druckregulierventil 3, ein Verschlußventil 4 und ein ansteuerbares Steuerventil 5, ausgestattet. Das Steuerventil 5 ist mit einer Regeleinheit 6 verbunden, von der aus es angesteuert wird. Die Regeleinheit 6 verarbeitet ein Signal, das von einem Drucksensor 8 geliefert wird, der im Innern des Silos 1 im oberen Bereich des Silos oberhalb des Füllgutes 10 angeordnet ist.

Das Silo 1 ist zur Erhöhung seiner Gasdichtheit innen allseitig mit einem Anstrich 11 aus dauerelastischer Kunststoffarbe versehen. Im Kopfbereich des Silos sind schließlich ein Auslaß 12 mit Auslaßventil 13 und ein Sicherheitsventil 14 gegen Überdruck angeordnet.

Eine Schädlingsbehandlung mit Stickstoff wird nun wie folgt durchgeführt:

Das Druckreduzierventil 3 und das Steuerventil 5 werden für die anfängliche Spülphase etwa so eingestellt bzw. geschaltet, daß nach Öffnen des Schaltventils 4 dem Silo eine Gasmenge etwa derart zufließt, daß nach einigen wenigen Stunden dem Silo ein Gasvolumen zugeflossen ist, das etwa dem Silovolumen selbst entspricht. Nach dieser Spülung besteht gemäß durchgeführten Messungen bezüglich des Sauerstoffgehalts im Silo eine zur Schädlingsbekämpfung geeignete Atmosphäre mit weniger als 2 Vol.% Sauerstoff. Es ist natürlich von Vorteil, diese Anfangskonzentration einmal mit Hilfe eines entsprechenden Meßgerätes genau zu bestimmen, um so von genau definierten Anfangsbedingungen ausgehen zu können. Die oben beschriebene Anfangsspülung liefert jedoch in aller Regel bei guter Dichtheit des Silos eine geeignete Stickgas- bzw . Stickstoffgas-Atmosphäre.

Auf die Spülphase folgt nun die eigentliche Behandlungsphase, in der die O₂-arme Atmosphäre in der Regel über mehrere Wochen aufrechterhalten wird. Dazu ist erfindungsgemäß mit dem Drucksensor 8, der Regeleinheit 6 und dem Steuerventil 5 ein vollständiger Regelkreis vorhanden, der dafür sorgt, daß der Druck im Silo in einem bestimmten, wählbaren Bereich gehalten wird, der an der Regeleinheit 6 einstellbar ist.

Eine derartige Regelung ist an sich nicht neu, aber es ist nicht ohne weiteres zu erwarten, daß mit einem drucksensitiven Regelkreis eine sauerstoffarme Atmosphäre über entsprechend lange Zeiten aufrechterhalten werden kann.

Dabei kann grundsätzlich in Silos mit höherer Gasdichtheit mit niedrigeren Drücken gearbeitet werden. Beispielsweise kann bei den gemäß der Erfindung innen beschichteten Silos mit einem unteren Grenzdruck von bis zu 10 Pa (0,1 mbar) und einem oberen Grenzdruck von z.B. 20 Pa gearbeitet werden. Dies sind die erfindungsgemäß an der unteren Grenze liegenden Druckwerte, die einen minimierten Gasverbrauch ergeben.

Diese Einstellung bedeutet, daß eine Stickstoff-Zufuhr zum Silo dann ausgelöst wird, wenn der Überdruck im Silo auf 10 Pa gefallen ist. Die Gaszufuhr erfolgt über das Druckreduzierventil 3 mit einem etwas über dem Regeldruck eingestellten Druckniveau (z.B. 50 Pa). Nach Erreichen des oberen Druck-Sollwertes im Silo (20 Pa), wird die Gaszufuhr wieder abgestellt. Auf diese Weise kann eine sich zur Schädlingsbekämpfung eignende Behandlungs-atmosphäre über Wochen hinweg aufrechterhalten werden.

Es hat sich gezeigt, daß bei einer derartigen Behandlung mit Stickstoff bei Temperaturen um etwa 10°C nach etwa 9 Wochen praktisch alle Schädlinge abgetötet waren. Bereits nach 7 Wochen hatten nur noch wenige Schädlinge überlebt.

Diese Ergebnisse sind mit denen vorbekannter verfahren vergleichbar, wobei dies mit der vorliegenden Erfindung mit vergleichsweise niedrigen Gasverbräuchen und verhältnismäßig geringem Aufwand erreicht wird.

## Patentansprüche

1. Verfahren zur Schädlingsbekämpfung in körnigen Nahrungsmitteln bei deren Aufbewahrung in einem Behälter, beispielsweise einem Vorratssilo, bei dem ein Stickgas in den Behälter eingeführt wird, dadurch gekennzeichnet, daß die nach einer einleitenden Verdrängungsspülung im Behälter hergestellte Stickgasatmosphäre durch druckgesteuerte Aufrechterhaltung eines geringen Überdrucks im Behälter erhalten wird.

2. Verfahren nach Anspruch 1, dadurch gekennzeichnet, daß die Drucksteuerung derart erfolgt, daß bei Unterschreiten eines bestimmten Druckwertes im Behälter eine Stickgaszugabe zum Behälter ausgelöst wird, die so lange aufrechterhalten wird, bis ein zweiter, höherer Druckwert im Behälter erreicht ist.

3. Verfahren nach einem der Ansprüche 1 oder 2, dadurch gekennzeichnet, daß die Gasdichtheit des Behälters zur Schädlingsbekämpfung vor der Stickgasbehandlung erhöht wird.

4. Verfahren nach einem der Ansprüche 1 bis 3, dadurch gekennzeichnet, daß ein Überdruck zwischen 10 und 1000 Pa, vorzugsweise zwischen 10 und 100 Pa, aufrechterhalten wird.

5. Verfahren nach einem der Ansprüche 1 bis 4, dadurch gekennzeichnet, daß als Stickgas Stickstoff angewendet wird.

6. Verfahren nach Anspruch 5, dadurch gekennzeichnet, daß das Stickstoffgas im unteren (oberen) Bereich des Behälters in diesen eingeführt wird und die Druckmessung zur Regelung des Überdrucks im oberen (unteren) Bereich des Behälters erfolgt.

7. Nahrungsmittelbehälter zur Durchführung des Verfahrens nach einem der Ansprüche 1 bis 6, mit einer Leitung (2), die ihn mit einer Stickgasquelle verbindet, dadurch gekennzeichnet, daß ein Drucksensor (8) im Innenraum des Behälters (1) angeordnet ist, der mit einer Regeleinheit (6) in Verbindung steht, die wiederum ein ansteuerbares Ventil (5) schaltet, das sich in der Leitung (2) für die Stickgaszufuhr befindet.

## Claims

1. A method of controlling pests in granular foodstuffs when these are stored in a container, for example a storage bin, wherein an asphyxiating gas is introduced into the container, characterised in that the asphyxiating gas atmosphere established in the container following an introductory displacement flushing process is maintained by pressure-controlled maintenance of a slight excess pressure in the container.

2. A method as claimed in Claim 1, characterised in that the pressure control is carried out in such manner that when a specific pressure value in the container is undershot, an addition of asphyxiating gas to the container is triggered and is maintained until a second, higher pressure value is attained in the container.

3. A method as claimed in one of Claims 1 or 2, characterised in that the gas-tightness of the pest control container is increased prior to the asphyxiating gas treatment.

4. A method as claimed in one of Claims 1 to 3, characterised in that an excess pressure of between 10 and 1000 Pa, preferably between 10 and 100 Pa, is maintained.

5. A method as claimed in one of Claims 1 to 4, characterised in that nitrogen is used as asphyxiating gas.

6. A method as claimed in Claim 5, characterised in that the nitrogen gas is introduced into the container in the lower (upper) region thereof, and the pressure measurement for the regulation of the excess pressure takes place in the upper (lower) region of the container.

7. A foodstuffs container for the implementation of the process claimed in one of Claims 1 to 6, comprising a pipeline (2) which connects said container to an asphyxiating gas source, characterised in that a pressure sensor (8) is arranged in the interior of the container (1), which pressure sensor (8) is connected to a regulating unit (6) which in turn switches a controllable valve (5) which is located in the pipeline (2) for the asphyxiating gas supply.

## Revendications

1. Procédé pour lutter contre les dommages occasionnés aux aliments granulaires lors de leur conservation dans un récipient, par exemple un silo de stockage, dans lequel un gaz asphyxiant est introduit dans le récipient, caractérisé en ce qu'après formation d'une atmosphère asphyxiante dans le récipient par introduction d'un gaz de balayage , est maintenue dans le récipient une faible surpression due à l'action de moyens de régulation de la pression.

2. Procédé selon la revendication 1, caractérisé en ce que la régulation de pression est réalisée de telle facon que, lorsque la pression devient inférieure à une valeur déterminée dans le récipient, se produise une addition de gaz asphyxiant dans le récipient, laquelle se poursuit jusqu'à l'obtention d'une deuxiéme valeur de pression plus élevée, dans le récipient.

3. Procédé selon la revendication 1 ou 2, caractérisé en ce que l'étanchéité du récipient au gaz pour lutter contre les dommages précités est augmentée préalablement au traitement par le gaz asphyxiant.

4. Procédé selon l'une quelconque des revendications 1 à 3, caractérisé en ce que la surpression est maintenue à une valeur comprise entre 10 et 1 000 Pa, de préférence entre 10 et 100 Pa.

5. Procédé selon l'une quelconque des revendications 1 à 4, caractérisé en ce que l'on utilise de l'azote comme gaz asphyxiant.

6. Procédé selon la revendication 5, caractérisé en ce que le gaz asphyxiant est introduit dans la partie inférieure (supérieure) du récipient et en ce que la mesure de la pression destinée à réguler la surpression est effectuée dans la partie supérieure (inférieure) du récipient.

7. Récipient de conservation d'aliment pour la mise en oeuvre du procédé selon l'une des revendications 1 à 6, comprenant une conduite (2), reliant le récipient à une source de gaz asphyxiant, caractérisé en ce qu'un capteur de pression (8) est disposé dans l'espace intérieur du récipient (1), lequel est relié à une unité de réglage (6) qui, elle-même, est reliée à une valve pilotée (5) qui est disposée sur la conduite (2) d'alimentation en gaz asphyxiant.
